# EUROPÄISCHE PATENTSCHRIFT

(11) **EP 2 656 164 B1**
(45) Veröffentlichungstag und Bekanntmachung des Hinweises auf die Patenterteilung: **17.12.2014**
(21) Anmeldenummer: 11807686.8
(22) Anmeldetag: 21.12.2011
(51) Int. Cl.: G06F 1/16, G02F 1/1333, H04N 5/64

(54) **ANZEIGEEINHEIT**
DISPLAY UNIT
UNITÉ D'AFFICHAGE

(30) Priorität: 22.12.2010 DE 102010055482
(43) Veröffentlichungstag der Anmeldung: 30.10.2013
(73) Patentinhaber: Continental Automotive GmbH, 30165 Hannover (DE)
(72) Erfinder: KARL, Klaus, 63864 Glattbach (DE); KISSEL, Robert Wolfgang, 63329 Egelsbach (DE); LÜCK, Hans-Joachim, 63128 Dietzenbach (DE)
(86) Internationale Anmeldenummer: PCT/EP2011/073649
(87) Internationale Veröffentlichungsnummer: WO 2012/085122

(56) Entgegenhaltungen:
- EP-A1- 1 191 239
- DE-A1- 3 736 637
- DE-C1- 3 709 330

## Beschreibung

Die Erfindung bezieht sich auf eine Anzeigeeinheit mit einem Displaymodul, das ein Display mit einer Displayrückwand auf der Rückseite des Displays aufweist, wobei die Displayrückwand mehrere zur dem Display abgewandten Seite hin hervorstehende Schraubdome mit zur Ebene der Displayrückwand parallelen Stützflächen aufweist, mit einem die Rückseite des Displaymoduls abdeckenden Gehäuse, das den Schraubdomen gegenüberliegende Abstützdome mit Abstützflächen sowie mit zu den Schraubdomen gerichteten Durchgangsbohrungen besitzt, durch die Befestigungssschrauben hindurchgeführt sind, die sich mit ihren Schraubenköpfen auf der dem Displaymodul abgewandten Seite abstützen und in Bohrungen der Schraubdome das Displaymodul direkt oder indirekt gegen das Gehäuse verspannend einschraubbar sind.

Bei derartigen Anzeigeeinheiten sind sehr hohe Anforderungen an die Parallelität der Ebene der Stützflächen der Schraubdome und der Ebene der Abstützflächen der Abstützdome zur Ebene des Displays einzuhalten um Fleckenbildungen im Display durch Displayverspannungen zu vermeiden.

Zur Erfüllung dieser hohen Anforderungen ist die Einhaltung der Toleranzen einer langen Toleranzkette erforderlich, wodurch die Herstellung der Anzeigeeinheit aufwendig und teuer ist.

Distanzstücke zur Verwendung bei der Montage von Bildröhren in Gehäusen oder Rahmen sind aus DE 3 736 637 A1, DE 3 709 330 C1 und EP 1 191 239 A1 bekannt.

Aufgabe der Erfindung ist es daher, eine Anzeigeeinheit der eingangs genannten Art zu schaffen, die bei einfachem und kostengünstigem Aufbau Verspannungen des Displays vermeidet.

Diese Aufgabe wird erfindungsgemäß dadurch gelöst, dass zwischen jedem Schraubdom und dem ihm zugeordneten Abstützdom ein Distanzstück angeordnet ist, das sich mit seiner dem Schraubdom zugewandten Seite an der Stützfläche des Schraubdoms abstützt, wobei die an der Stützfläche des Schraubdoms anliegende Fläche des Distanzstücks sich parallel zur Ebene der Displayrückwand erstreckt, und dass das Distanzstück mit seiner dem Abstützdom zugewandten Distanzstückfläche an der Abstützfläche des Abstützdoms abgestützt ist, wobei die Distanzstückfläche und die Abstützfläche des Abstützdoms einander gegenläufig wendelartig ansteigend konzentrisch zur Durchgangsbohrung ausgebildet sind und die Befestigungsschraube mit ihrem Gewindeschaft eine durchgehende Distanzstücköffnung durchragt, mit deren Innenwand der Gewindeschaft bis zu einem bestimmten Drehmoment in Reibschluss steht. Dabei sorgen die Distanzstücke zwischen dem Displaymodul und dem Gehäuse für einen Toleranzausgleich zwischen Displaymodul und Gehäuse, wobei bei der Montage der Anzeigeeinheit die Distanzstücke in das Gehäuse eingelegt und ein bestimmter Abstand zwischen Displaymodul und Gehäuse mit Hilfe eines Betriebsmittels eingestellt werden.

Die entstandene variable Lücke zwischen dem Displaymodul und dem Gehäuse wird durch das Distanzstück ausgefüllt. Dazu werden die Befestigungsschrauben angezogen, wobei durch den Reibschluss zwischen dem Gewinde der Befestigungsschrauben und den Innenwänden der Distanzöffnungen in den Distanzstücken die Distanzstücke mitgedreht werden, bis die wendelartigen Distanzstückflächen an den ihnen zugeordneten wendelartigen Abstützflächen der Abstützdome zu Anlage kommen. Dadurch sind die variablen Lücken zwischen dem Displaymodul und dem Gehäuse ausgefüllt.

Durch das Aneinanderliegen der gegenläufig wendelartigen Distanzstückflächen und Abstützflächen erhöht sich das Drehmoment beim Einschrauben der Befestigungsschrauben und überschreitet das bestimmte Drehmoment sowie überwindet den Reibschluss zwischen den Gewindeschäften der Befestigungsschrauben und den Innenwänden der Distanzstücköffnungen.

Damit werden die Distanzstücke nicht mehr mit den Befestigungsschrauben mitgedreht. Diese werden nur noch in die Bohrungen der Schraubdome zur Befestigung des Displaymoduls am Gehäuse eingeschraubt.

Die Schraubdome können kostengünstig ausgebildet sein und das Gehäuse benötigt keine Bearbeitung der Abstützflächen der Abstützdome.

Enge Toleranzen der aneinanderliegenden Teile müssen nicht eingehalten werden.

Die Distanzstücköffnungen besitzen vorzugsweise einen polygonalen Querschnitt wie z. B. einen Dreieckquerschnitt.

Das Gewinde der Befestigungsschraube liegt dabei nur im mittleren Bereich der Flanken des Polygons an, so dass der Reibschluss zwischen Gewinde und Distanzstück auf einfache Weise auf das bestimmte Drehmoment begrenzt werden kann.

Um ein selbsttätiges Verdrehen des Distanzstücks relativ zu dem ihm zugeordneten Abstützdom und somit ein Lösen der Verspannung zwischen Displaymodul und Gehäuse zu vermeiden, kann der Neigungswinkel des wendelartigen Anstiegs von Distanzstückfläche und Abstützfläche zur Ebene der Displayrückwand ein selbsthemmender Winkel sein.

In einfacher Ausbildung können die Schraubdome Laschen mit sich parallel zur Ebene der Displayrückwand erstreckenden, die Bohrungen der Schraubdome aufweisenden Laschenteilen sein.

Dabei erfolgt eine Bauteil- und Montageaufwandreduzierung, wenn die Displayrückwand ein Stanz-Biegeteil aus Blech ist, mit dem die Laschen einteilig ausgebildet sind.

Sind weiterhin die Laschen von Blechmuttern umgriffen, deren Gewindebohrungen die Bohrungen der Schraubdome bilden, kann auf einfache Weise eine Ausrichtung des Anzeigemoduls parallel zum Gehäuse erfolgen, so dass in dieser Ausrichtrichtung keine engen Toleranzen einzuhalten sind.

Zwischen den Stützflächen der Schraubdome und den Distanzstücken kann eine sich parallel zur Displayrückwand erstreckende Leiterplatte angeordnet sein.

Zur stabilen Halterung und zum Schutz des Displaymoduls ist vorzugsweise das Gehäuse ein starres Gussteil, insbesondere Magnesiumgussteil, dessen Abstützflächen der Abstützdome unbearbeitet sind.

Ist das Display ein Flüssigkristalldisplay, so ist die Vermeidung von Fleckenbildungen auf der Anzeigeebene des Displays aufgrund von Displayverspannungen besonders effektiv.

Ein Ausführungsbeispiel der Erfindung ist in der Zeichnung dargestellt und wird im Folgenden näher beschrieben. Es zeigen:
- Figur 1: eine perspektivische Explosionsdarstellung einer Anzeigeeinheit,

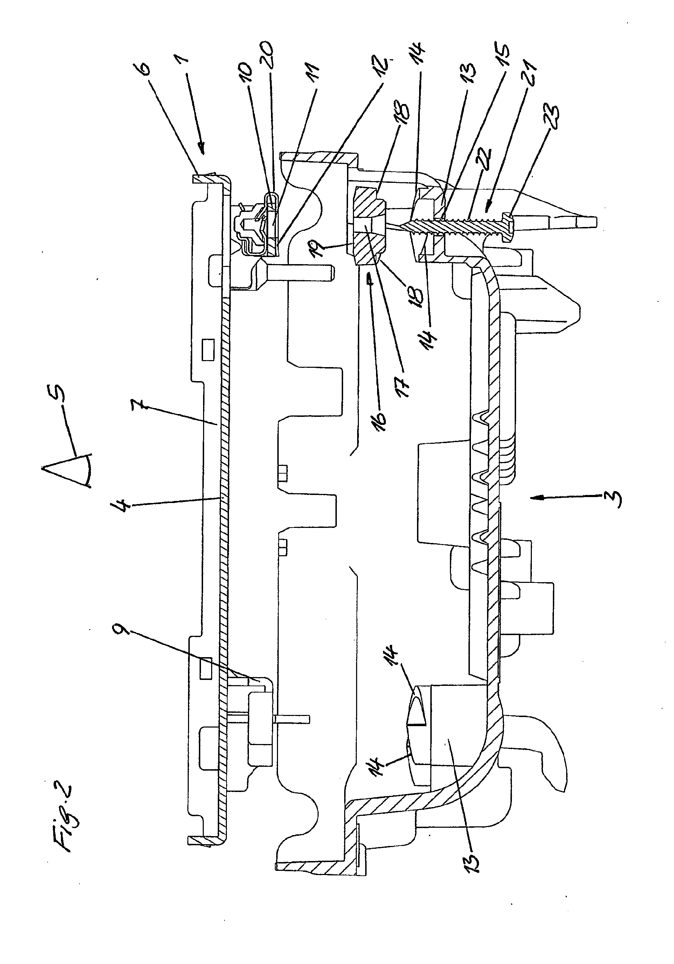

- Figur 2: eine Seitenansicht der Anzeigeeinheit nach Figur 1 in Explosionsdarstellung ohne Leiterplatte,

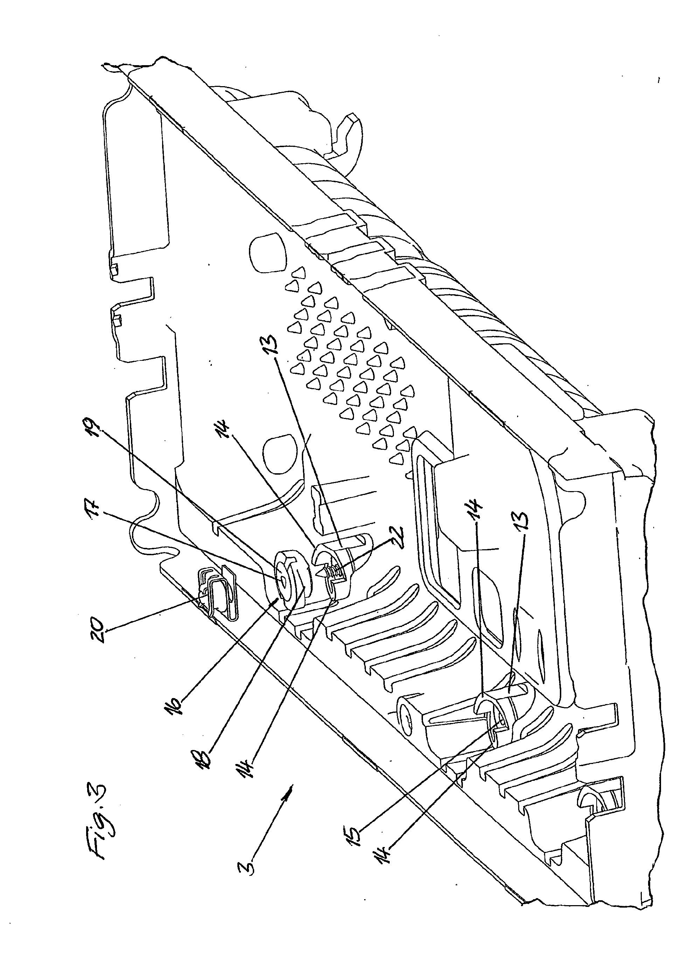

- Figur 3: eine perspektivische Innenansicht des Gehäuses der Anzeigeeinheit nach Figur 1 mit Explosionsdarstellung der Befestigungskomponenten,

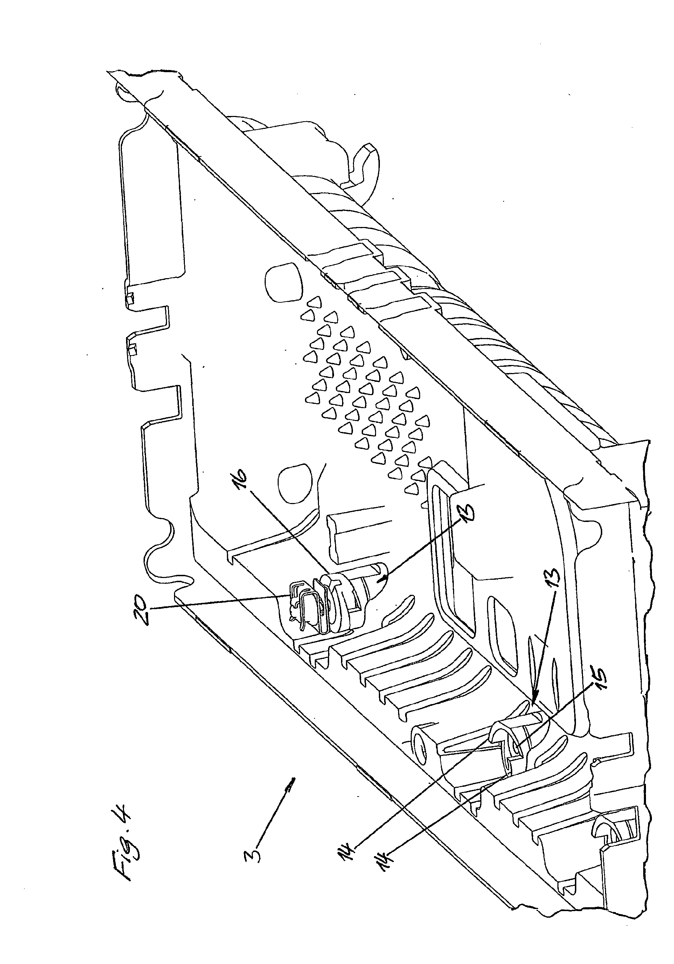

- Figur 4: eine perspektivische Innenansicht des Gehäuses der Anzeigeeinheit nach Figur 1,

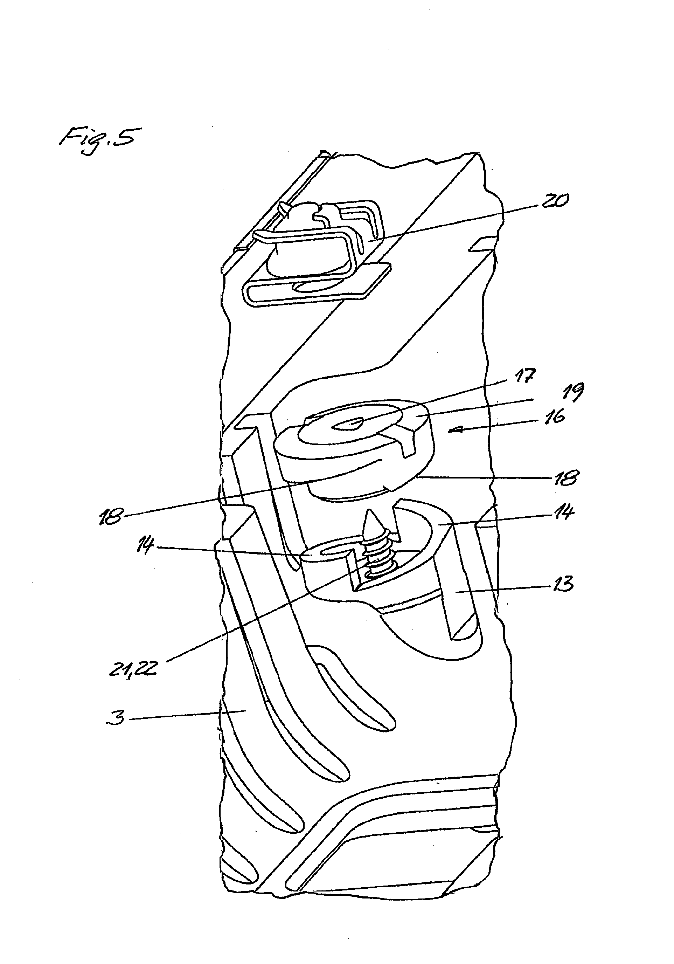

- Figur 5: einen vergrößerten Ausschnitt aus Figur 3.

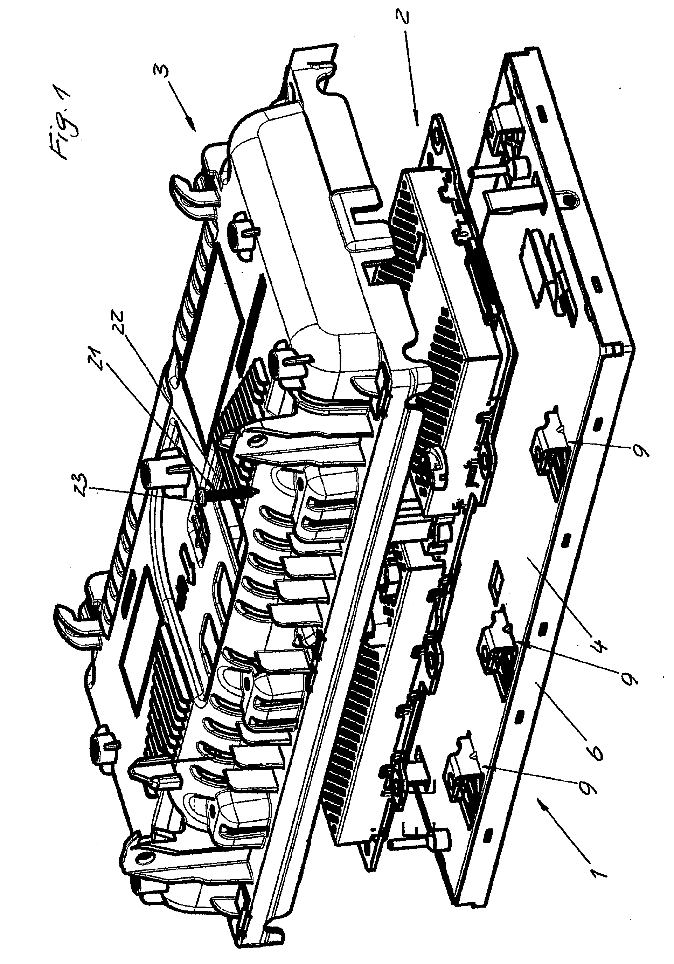

In Figur 1 ist eine Anzeigeeinheit perspektivisch von der Rückseite her dargestellt. Sie weist eine Displayrückwand 1, eine Leiterplatte 2 und ein wannenartiges Gehäuse 3 als Magnesiumgussteil auf.

Die Displayrückwand 1 ist ein Stanz-Biegeteil aus Blech mit einem Boden 4 und einem zur Seite eines Beobachters 5 hin ragenden umlaufenden Rand 6.

In die dadurch gebildete kastenartige Aufnahme 7 ist ein nicht dargestelltes Flüssigkristalldisplay einsetzbar.

Durch Ausstanzen und Biegen im Bereich des Bodens 4 sind entlang den Längsseiten der Displayrückwand 1 jeweils drei zur Rückseite hin hervorstehende L-förmige Laschen 9 mit zum Boden 4 parallelen Laschenteilen 10 ausgebildet, die eine Durchgangsöffnung 11 besitzen.

Die dem Boden 4 abgewandten Seiten der Laschenteile 10 bilden Stützflächen 12.

Koaxial zu den Durchgangsöffnungen 11 besitzt das Gehäuse 3 Abstützdome 13 mit der Displayrückwand 1 zugewandten Abstützflächen 14 und sich rechtwinklig zur Displayrückwand 1 die Abstützdome 13 durchragenden Durchgangsbohrungen 15.

Jeder Abstützdom 14 weist dabei zwei zu den Durchgangsbohrungen 15 konzentrisch einen Kreis bildende Abstützflächen 14 auf, wobei jede Abstützfläche 14 sich der Displayrückwand 1 annähernd entgegen dem Uhrzeigersinn wendelartig ansteigend ist.

Koaxial zu den Abstützdomen 13 sind Distanzstücke 16 mit durchgehenden Distanzstücköffnungen 17 dreieckigen Querschnitts angeordnet.

Auf der den Abstützdomen 13 zugewandten Seite sind die Distanzstücke 16 mit zwei zu den Distanzstücköffnungen 17 koaxialen, einen Kreis bildenden Distanzstückflächen 18 ausgebildet, wobei die Distanzstückflächen 18 dem zugeordneten Abstützdom 13 sich annähernd und zu den Abstützflächen 14 gegenläufig wendelartig ansteigend sind.

Die den Distanzstückflächen 18 abgewandten Flächen 19 der Distanzstücke 16 erstrecken sich parallel zur Ebene der Displayrückwand 1.

Mit diesen Flächen 19 liegen die Distanzstücke 16 über die auf den von Blechmuttern 20 umgriffenen Laschenteilen 10 auf.

Bei der Montage werden das Gehäuse 3 und das Displaymodul 1 über Betriebsmittel zueinander ausgerichtet und gehalten.

Danach werden von der Rückseite des Gehäuses 3 her Befestigungsschrauben 21 mit ihrem Gewindeschaft 22 durch die Durchgangsöffnungen 15 hindurchgeführt und in die Distanzstücköffnungen 17 hineingeschraubt.

Dabei ist der Gewindeschaft 22 zunächst in Reibschluss mit der Innenwand der Distanzstücköffnung 17 und dreht dadurch das Distanzstück 16 mit, bis der Spalt zwischen der Leiterplatte 2 und der Abstützfläche 14 des Abstützdoms 13 geschlossen ist.

Dies erfolgt durch ein rampenartiges Aneinandergleiten der Distanzstückflächen 18 an den Abstützflächen 14.

Bei einem weiteren Einschrauben der Befestigungsschrauben 21 wird der Reibschluss der Befestigungsschrauben 21 in der Distanzstücköffnung 17 überwunden und der Gewindeschaft 22 weiter durch die Distanzstücköffnung 17 in die Blechmutter 20 eingeschraubt, bis der Schraubenkopf 23 der Befestigungsschraube 21 fest an der Außenseite des Gehäuses 3 in Auflage ist.

Damit ist das Displaymodul spannungsfrei mit dem Gehäuse 3 verbunden.

## Patentansprüche

1. Anzeigeeinheit mit einem Displaymodul, das ein Display mit einer Displayrückwand (1) auf der Rückseite des Displays aufweist, wobei die Displayrückwand mehrere zur dem Display abgewandten Seite hin hervorstehende Schraubdome mit zur Ebene der Displayrückwand parallelen Stützflächen aufweist, mit einem die Rückseite des Displaymoduls abdeckenden Gehäuse (3), das den Schraubdomen gegenüberliegende Abstützdome mit Abstützflächen sowie mit zu den Schraubdomen gerichteten Durchgangsbohrungen besitzt, durch die Befestigungsschrauben hindurchgeführt sind, die sich mit ihren Schraubenköpfen auf der dem Displaymodul abgewandten Seite abstützen und in Bohrungen der Schraubdome das Displaymodul direkt oder indirekt gegen das Gehäuse verspannend einschraubbar sind, **dadurch** g e - **kennzeichnet,** dass zwischen jedem Schraubdom und dem ihm zugeordneten Abstützdom (13) ein Distanzstück (16) angeordnet ist, das sich mit seiner dem Schraubdom zugewandten Seite an der Stützfläche (12) des Schraubdoms abstützt, wobei die an der Stützfläche (12) des Schraubdoms anliegende Fläche (19) des Distanzstücks (16) sich parallel zur Ebene der Displayrückwand (1) erstreckt, und dass das Distanzstück (16) mit seiner dem Abstützdom (13) zugewandten Distanzstückfläche (18) an der Abstützfläche (14) des Abstützdoms (13) abgestützt ist, wobei die Distanzstückfläche (18) und die Abstützfläche (14) des Abstützdoms (13) einander gegenläufig wendelartig ansteigend konzentrisch zur Durchgangsbohrung (15) ausgebildet sind und die Befestigungsschraube (21) mit ihrem Gewindeschaft (22) eine durchgehende Distanzstücköffnung (17) durchragt, mit deren Innenwand der Gewindeschaft (22) bis zu einem bestimmten Drehmoment in Reibschluss steht.

2. Anzeigeeinheit nach einem der vorhergehenden Ansprüche, **dadurch gekennzeichnet, dass** die Distanzstücköffnung (17) einen polygonalen Querschnitt aufweist.

3. Anzeigeeinheit nach einem der vorhergehenden Ansprüche, **dadurch gekennzeichnet, dass** der Neigungswinkel des wendelartigen Anstiegs von Distanzstückfläche (18) und Abstützfläche (14) zur Ebene der Displayrückwand (1) ein selbsthemmender Winkel ist.

4. Anzeigeeinheit nach einem der vorhergehenden Ansprüche, **dadurch gekennzeichnet, dass** die Schraubdome Laschen (9) mit sich parallel zur Ebene der Displayrückwand (1) erstreckenden, die Bohrungen der Schraubdome aufweisenden Laschenteile (10) sind.

5. Anzeigeeinheit nach Anspruch 4, **dadurch gekennzeichnet, dass** die Displayrückwand (1) ein Sranz-Biegeteil aus Blech ist, mit dem die Laschen (9) einteilig ausgebildet sind.

6. Anzeigeeinheit nach einem der Ansprüche 4 und 5, d a - **durch gekennzeichnet,** dass die Laschen (9) von Blechmuttern (20) umgriffen sind, deren Gewindebohrungen die Bohrungen der Schraubdome bilden.

7. Anzeigeeinheit nach einem der vorhergehenden Ansprüche, **dadurch gekennzeichnet, dass** zwischen den Stützflächen (12) der Schraubdome und den Distanzstücken (16) eine sich parallel zur Displayrückwand (1) erstreckende Leiterplatte (2) angeordnet ist.

8. Anzeigeeinheit nach einem der vorhergehenden Ansprüche, **dadurch gekennzeichnet, dass** das Gehäuse (3) ein starres Gussteil ist, dessen Abstützflächen (14) der Abstützdome (13) unbearbeitet sind.

9. Anzeigeeinheit nach Anspruch 8, **dadurch gekennzeichnet, dass** das Gehäuse (3) ein Magnesiumgussteil ist.

10. Anzeigeeinheit nach einem der vorhergehenden Ansprüche, **dadurch gekennzeichnet, dass** das Display ein Flüssigkristalldisplay ist.

## Claims

1. Display unit having a display module, which has a display having a display rear wall (1) at the rear side of the display, the display rear wall having a plurality of screw domes which protrude in the direction towards the side facing away from the display and which have support faces which are parallel with the plane of the display rear wall, having a housing (3) which covers the rear side of the display module and which has support domes which are opposite the screw domes and which have support faces and through-holes which are directed towards the screw domes and through which there are inserted securing screws which are supported with the screw heads thereof at the side facing away from the display module and which can be screwed into holes of the screw domes so as to brace the display module directly or indirectly against the housing, **characterized in that**, between each screw dome and the support dome (13) which is associated therewith, there is arranged a spacer piece (16) which is supported with the side thereof facing the screw dome on the support face (12) of the screw dome, the face (19) of the spacer piece (16) which abuts the support face (12) of the screw dome extending parallel with the plane of the display rear wall (1), and **in that** the spacer piece (16) is supported with its spacer piece face (18) facing the support dome (13) on the support face (14) of the support dome (13), the spacer piece face (18) and the support face (14) of the support dome (13) being constructed concentrically relative to the through-hole (15) so as to extend helically upwards in opposing directions with respect to each other and the securing screw (21) protruding with the threaded shaft (22) thereof through a continuous spacer piece opening (17), with the inner wall of which the threaded shaft (22) is frictionally engaged up to a specific torque.

2. Display unit according to Claim 1, **characterized in that** the spacer piece opening (17) has a polygonal cross-section.

3. Display unit according to either of the preceding claims, **characterized in that** the angle of inclination of the helical rise of the spacer piece face (18) and support face (14) with respect to the plane of the display rear wall (1) is a self-locking angle.

4. Display unit according to one of the preceding claims, **characterized in that** the screw domes are flaps (9) having flap portions (10) which extend parallel with the plane of the display rear wall (1) and which have the holes of the screw domes.

5. Display unit according to claim 4, **characterized in that** the display rear wall (1) is a punched bent component which comprises a metal sheet and with which the flaps (9) are constructed in an integral manner.

6. Display unit according to either Claim 4 or Claim 5, **characterized in that** the flaps (9) are surrounded by sheet metal nuts (20), whose threaded holes form the holes of the screw domes.

7. Display unit according to one of the preceding claims, **characterized in that** a printed circuit board (2) which extends parallel with the display rear wall (1) is arranged between the support faces (12) of the screw domes and the spacer pieces (16).

8. Display unit according to one of the preceding claims, **characterized in that** the housing (3) is a rigid cast component whose support faces (14) of the support domes (13) are unprocessed.

9. Display unit according to Claim 8, **characterized in that** the housing (3) is a magnesium cast component.

10. Display unit according to one of the preceding claims, **characterized in that** the display is a liquid crystal display.

## Revendications

1. Unité d'affichage, comprenant un module de visualisation, qui a un écran ayant une paroi (1) arrière sur la face arrière de l'écran, la paroi arrière de l'écran ayant plusieurs dômes de vissage en saillie de la face éloignée de l'écran et ayant des faces d'appui parallèles au plan de la paroi arrière de l'écran, comprenant un boîtier (3), qui recouvre la face arrière du module de visualisation et qui a des dômes d'appui opposés aux dômes de vissage et ayant des surfaces d'appui, ainsi que des trous traversants dirigés vers les dômes de vissage, dans lesquels passent des vis de fixation, qui s'appuient par leur tête de vis sur la face éloignée du module de visualisation et qui peuvent être vissées en serrant directement ou indirectement le boîtier dans des trous des dômes de vissage du module de visualisation, **caractérisée en ce qu'**il y a, entre chaque dôme de vissage et le dôme (13) d'appui qui lui est associé, une pièce (16) d'entretoisement, qui, par sa face tournée vers le dôme de vissage, s'appuie sur la surface (12) d'appui du dôme de vissage, dans laquelle la surface (19), s'appliquant à la surface (12) d'appui du dôme de vissage, de la pièce (16) d'entretoisement s'étend parallèlement au plan de la paroi (1) arrière de l'écran et **en ce que** la pièce (16) d'entretoisement s'appuie, par sa surface (18) tournée vers le dôme (13) d'appui, sur la surface (14) d'appui du dôme (13) d'appui, la surface (18) d'entretoisement et la surface (14) d'appui de la pièce (13) d'appui étant constituées concentriquement aux trous (15) traversants en s'élevant à la manière d'une hélice en sens contraire et la vis (21) de fixation passant par sa tige (22) filetée dans une ouverture (17) traversante de la pièce d'entretoisement avec la paroi intérieure de laquelle la tige (22) filetée est en relation de frottement jusqu'à un couple de rotation déterminé.

2. Unité d'affichage suivant l'une des revendications précédentes, **caractérisée en ce que** l'ouverture (17) de la pièce d'entretoisement a une section transversale polygonale.

3. Unité d'affichage suivant l'une des revendications précédentes, **caractérisée en ce que** l'angle d'inclinaison de l'élévation de type en hélice de la surface (18) de la pièce d'entretoisement et de la surface (14) d'appui par rapport au plan de la paroi (1) arrière de l'écran est un angle autobloquant.

4. Unité d'affichage suivant l'une des revendications précédentes, **caractérisée en ce que** les dômes de vissage sont des pattes (9) ayant des parties (10) s'étendant parallèlement au plan de la paroi (1) arrière de l'écran et comportant les trous des dômes de vissage.

5. Unité d'affichage suivant la revendication 4, **caractérisée en ce que** la paroi (1) arrière de l'affichage est une pièce en tôle découpée et pliée avec laquelle les pattes (9) sont constituées en une seule pièce.

6. Unité d'affichage suivant l'une des revendications 4 et 5, **caractérisée en ce que** les pattes (9) sont entourées d'écrous (20) en tôle, dont les taraudages forment les trous des dômes de vissage.

7. Unité d'affichage suivant l'une des revendications précédentes, **caractérisée en ce qu'**une plaquette (2) à circuits imprimés s'étendant parallèlement à la paroi (1) arrière de l'écran est disposée entre les surfaces (12) d'appui des dômes de vissage et les pièces (16) d'entretoisement.

8. Unité d'affichage suivant l'une des revendications précédentes, **caractérisée en ce que** le boîtier (3) est une pièce coulée rigide, dont les surfaces (14) d'appui des dômes (13) d'appui ne sont pas usinées.

9. Unité d'affichage suivant la revendication 8, **caractérisée en ce que** le boîtier (3) est une pièce coulée en magnésium.

10. Unité d'affichage suivant l'une des revendications précédentes, **caractérisée en ce que** l'écran est un écran à cristal liquide.
